# EUROPEAN PATENT APPLICATION

(11) **EP 1 081 951 A2**
(43) Date of publication of application: **07.03.2001**
(21) Application number: 00307512.4
(22) Date of filing: 31.08.2000
(51) Int. Cl.: H04N 7/16, A63F 13/12

(54) **Method and apparatus for selectively receiving programs, and method of and apparatus for selectively recording and reproducing programs**

(30) Priority: 31.08.1999 JP 24592799
(71) Applicant: Sony Computer Entertainment Inc., Tokyo 107-0052 (JP)
(72) Inventor: Ito, Takeshi, Sony Computer Entertainment Inc., Tokyo 107-0052 (JP); Kawai, Eiji, Sony Computer Entertainment inc., Tokyo 107-0052 (JP)
(74) Representative: Turner, James Arthur

(57) **Abstract**

A commercial message effect is increased without having to increase the number of channels and the number of commercial messages that are displayed. A program and simultaneously transmitted commercial messages that are divided in different bandwidths are alternately received (S2), and headers of the program data and the commercial message data are detected (S3). The received data that is judged as representing the program based on the headers is displayed on a display monitor on a real-time basis (S4, S5). From the received data that is judged as representing the commercial messages based on the headers, only those commercial messages whose category is the same as a preset category are extracted (S6, S7), and displayed on the display monitor on a real-time basis (S5). Since only desired commercial messages of all the simultaneously transmitted commercial messages are displayed, the commercial message effect can be increased without having to increase the number of channels and the number of commercial messages that are displayed.

## Description

The present invention relates to a method of and an apparatus for selectively receiving broadcast contents on a real-time basis and outputting video and/or audio signals based on the received broadcast contents, and a method of and an apparatus for selectively recording broadcast contents in a memory device and then reproducing the recorded contents.

Broadcasting media such as television and radio broadcasting media transmit contents, i.e., various forms of information including pictures, images (moving and still images), sounds, characters, numerals, etc. representing programs and commercial messages (CMs) that can be played back on television receivers and radio receivers, newspaper articles, and magazine articles.

Receiving devices such as television receivers and radio receivers receive transmitted contents and output video and/or audio signals on a real-time basis based on the received contents. Recording and reproducing devices such as video tape recorders record received contents and then reproduce video and/or audio signals based on the recorded contents at desired times for viewers and listeners. The receiving devices and the recording and reproducing devices are thus used for the convenience of viewers and listeners.

Broadcast contents include programs and CMs. Broadcasting media such as television and radio broadcasting media transmit the same CMs for all the viewers and listeners. Therefore, those broadcasting media find it difficult to narrow down viewers and listeners to specific target groups.

One solution has been to change broadcast CMs according to time zones or programs to aim at certain target audiences. While this approach has achieved certain advertisement success, no sufficient advertisement effect has been obtained because some CMs are still broadcast for wrong target audiences, e.g., CMs for female cosmetics are often broadcast in programs for male viewers and listeners.

The above problems cannot be solved by increasing the number of programs because more programs result in split audience ratings and increased program costs. Another drawback with more programs is that many programs are likely to be wasted because of a limited number of available reception channels.

Various respective aspects of the invention are defined in the appended claims.

Embodiments of the present invention can provide a method of and an apparatus for selectively receiving broadcast contents and a method of and an apparatus for selectively recording and reproducing broadcast contents to increase an advertisement effect, i.e., a CM effect, without increasing the number of programs contained in broadcast contents and also without increasing the periods of time available for broadcasting CMs.

According to an aspect of the present invention, there is provided an apparatus for selectively receiving contents including a selective contents extractor which selectively extracts contents in a category set up by a category setting unit, from simultaneously transmitted contents which are divided into a plurality of categories and received by a reception assembly on a real-time basis. A video signal and/or an audio signal of the contents extracted by the selective contents extractor are outputted on a real-time basis.

Therefore, the contents in the category set up by the category setting unit are outputted as a video signal and/or an audio signal on a real-time basis.

If the contents represent a commercial message, then only the commercial message in the preset category can be outputted as a video signal and/or an audio signal on a real-time basis.

If the apparatus is used as a television receiver, then the television receiver can have an added value.

If the apparatus is used as a portable information terminal, then the user can view only contents, e.g., only a commercial message, at any desired place.

According to another aspect of the present invention, there is provided an apparatus for selectively recording contents in a memory device and thereafter reproducing the recorded contents. The apparatus includes a selective contents extractor which selectively extracts contents in a category set up by a category setting unit, from contents received by a reception assembly and divided into the plurality of categories. The contents extracted by the selective contents extractor are stored into the memory device.

Inasmuch as contents in the category set up by the category setting unit are reproduced, the user can store and then reproduce only desired contents.

If the contents represent a commercial message, then only a commercial message in the preset category can be reproduced.

The apparatus may be used as a video recorder or a portable information terminal.

According to yet another aspect of the present invention, an apparatus for selectively recording and reproducing contents can reproduce a program and a selected commercial message on a real-time basis in an order in which the program and the extracted commercial message are received. Thus, the viewer can selectively view a desired program and a desired commercial message only.

According to yet still another aspect of the present invention, an apparatus for selectively recording and reproducing contents can store a program and a selected commercial message and thereafter reproduce the program and the commercial message that have been stored. Therefore, the viewer can selectively reproduce and view a desired program and a desired commercial message only.

According to a further aspect of the present invention, a method of selectively receiving contents receives simultaneously transmitted contents which are divided into a plurality of categories, selectively extracts contents in a preset category only, and reproduces and outputs the extracted contents. The method allows desired contents only to be received without an increase in the period of time for broadcasting the contents.

In the above method, if the contents represent a commercial message, then the user can view only a desired commercial message.

According to a yet further aspect of the present invention, a method of selectively recording and reproducing contents allows contents in a preset category to be stored and reproduced. Therefore, only desired contents can be stored and then reproduced at a desired time.

In the above method, if the contents represent a commercial message, then the user can reproduce only a desired commercial message.

The invention will now be described by way of example with reference to the accompanying drawings, throughout which like parts are referred to by like references, and in which:
FIG. 1 is a schematic view showing a user preference advertisement system according to an embodiment of the present invention;
FIG. 2 is a block diagram of a television receiver in the user preference advertisement system shown in FIG. 1;
FIG. 3 is a block diagram of a portable information terminal in the user preference advertisement system shown in FIG. 1;
FIG. 4 is a flowchart of an operation sequence of the user preference advertisement system shown in FIG. 1;
FIG. 5 is a table showing a displayed image for setting categories;
FIG. 6 is a diagram showing an example of received contents data;
FIG. 7 is a schematic view showing a user preference advertisement system according to another embodiment of the present invention;
FIG. 8 is a block diagram of a video recorder in the user preference advertisement system shown in FIG. 7;
FIG. 9 is a block diagram of a portable information terminal in the user preference advertisement system shown in FIG. 7;
FIG. 10 is a flowchart of an operation sequence of the user preference advertisement system shown in FIG. 7; and
FIG. 11 is a diagram showing another example of received contents data.

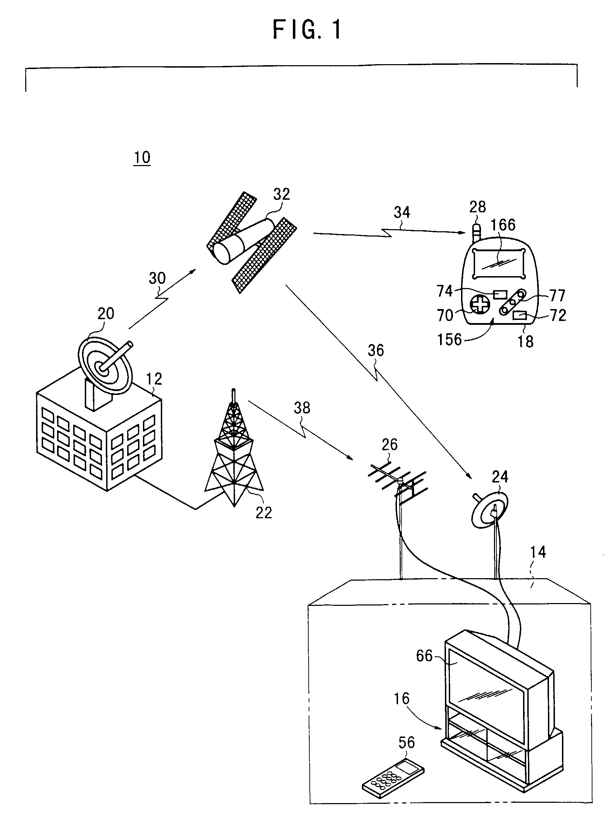

FIG. 1 schematically shows a user preference advertisement system 10 which incorporates a selective receiving apparatus and a selective recording and reproducing apparatus according to an embodiment of the present invention.

As shown in FIG. 1, the user preference advertisement system 10 basically comprises a broadcasting station 12 for broadcasting contents including programs and commercial messages (CMs) on a radio wave, a television receiver 16 positioned indoors, e.g., in a home 14, and serving as a selective receiving apparatus or a selective recording and reproducing apparatus for the contents, and a portable information terminal 18 carried and used outdoors and serving as another selective receiving apparatus or another selective recording and reproducing apparatus for the contents.

When programs as contents are transmitted on a radio wave from the broadcasting station 12, CMs as contents classified into a plurality of categories are simultaneously transmitted between the programs.

A satellite wave transmission antenna 20 for transmitting satellite digital broadcast waves and mobile digital broadcast waves, and a ground station transmission antenna 22 for transmitting ground digital broadcast waves are connected to the broadcasting station 12.

A satellite wave reception antenna 24 disposed at the home 14 and a ground digital broadcast reception antenna 26 are connected to the television receiver 16.

The portable information terminal 18 has a mobile digital broadcast reception antenna 28.

A radio wave 30 transmitted from the transmission antenna 20 of the broadcasting station 12 is sent via a broadcasting satellite 32 as a radio wave 34 to the portable information terminal 18, which receives the radio wave 34 via the reception antenna 28.

The radio wave 30 transmitted from the transmission antenna 20 of the broadcasting station 12 is also sent via the broadcasting satellite 32 as a radio wave 36 to the reception antenna 24 of the television receiver 16, which receives the radio wave 36 via the reception antenna 24.

A radio wave 38 transmitted from the transmission antenna 22 of the broadcasting station 12 is received by the television receiver 16 via the reception antenna 26.

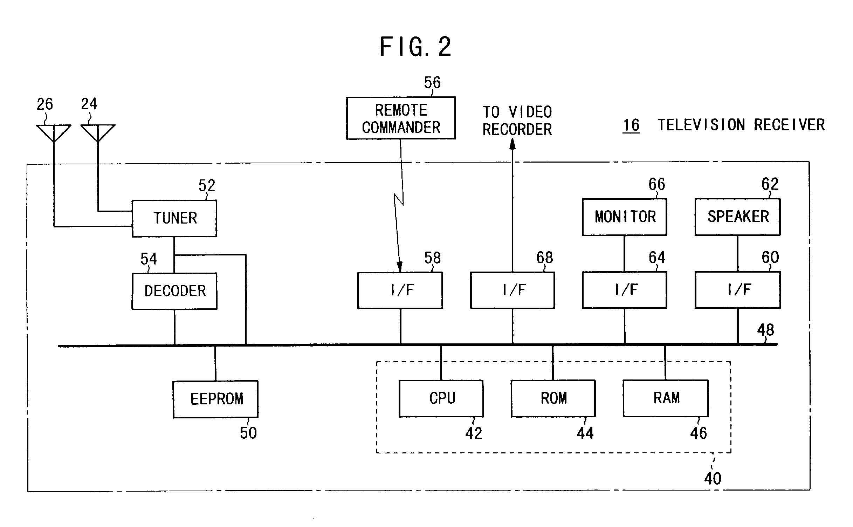

FIG. 2 shows in block form the television receiver 16 in the user preference advertisement system 10 shown in FIG. 1.

As shown in FIG. 2, the television receiver 16 has a control processor 40. The control processor 40 comprises a CPU (Central Processing Unit) 42 as a control means, a ROM (Read-Only Memory) 44 as a memory means for storing a control program, etc., and a RAM (Random-Access Memory) 46 as a memory means for storing working data. The CPU 42, the ROM 44, and the RAM 46 are connected to each other via a bus 48.

An EEPROM (Electrically Erasable Programmable ROM) 50 such as a flash memory as a memory means where stored data can be rewritten is connected to the bus 48.

The antennas 24, 26 are connected to a tuner 52. The antennas 24, 26 and the tuner 52 jointly make up a reception assembly. The tuner 52 is supplied with channel selection information that has been set up by a remote commander 56 as a control input unit that also functions as a category setting unit, via an interface 58, the bus 48, and the control processor 40.

Based on the channel selection information, the tuner 52 demodulates the data of a channel and supplies the demodulated data via a decoder 54 as a selective contents extractor, e.g., a selective CM extractor, to the bus 48. The decoder 54 is supplied with setting information of a certain or desired preset category, among a plurality of categories, from the remote commander 56 via the interface 58, the bus 48, the control processor 40, and the EEPROM 50.

The decoder 54 selectively extracts CM data that matches a category preset by the remote commander 56 and stored in the EEPROM 50, from a plurality of CMs as contents classified into a plurality of categories which have been simultaneously transmitted from the broadcasting station 12 and received via the reception antennas 24, 26 and the tuner 52, sends the extracted CM data to the bus 48, and sends program data of the received contents directly to the bus 48.

The remote commander 56 has a channel selection key, a cross key, and a decision key. The user can set a predetermined category with those keys of the remote commander 56, using images displayed on a monitor 66 such as a CRT display monitor or the like of the television receiver 16.

Of the program data and the selected CM data that are supplied via the decoder 54 to the bus 48, video data is sent via an interface 64 to the monitor 66, and audio data is sent via an interface 60 to a speaker 62.

The monitor 66 and the speaker 62 output the program data as contents of the channel selected by the remote commander 56 and the CM data as contents selectively extracted by the decoder 54, as a video output and an audio output, respectively, on a real-time basis upon reception thereof, to the audience.

A video tape recorder or a video recorder such as a DVD (Digital Video Disk) recorder as a recording and reproducing apparatus is connected via an interface 68 to the bus 48 if necessary.

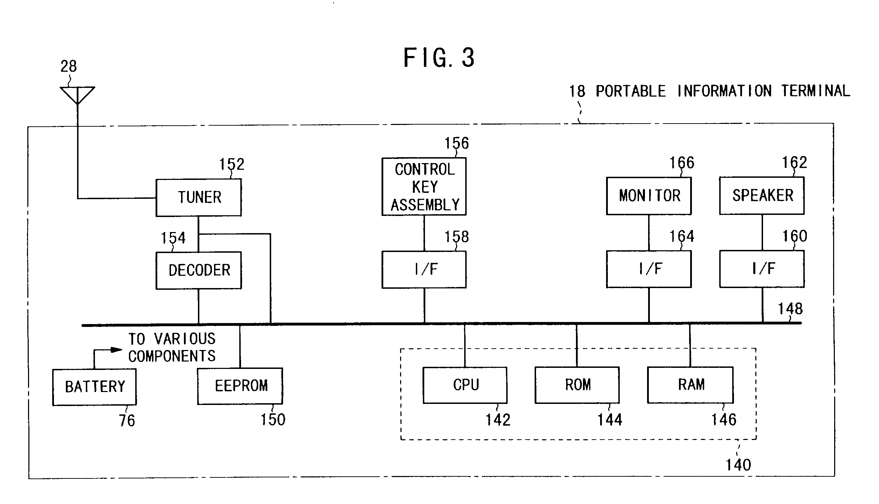

FIG. 3 shows in block form the portable information terminal 18 in the user preference advertisement system 10 shown in FIG. 1.

The portable information terminal 18 is basically similar in structure and function to the television receiver 16 shown in FIG. 2. Those parts of the portable information terminal 18 which are identical to those of the television receiver 16 are denoted by identical reference numerals with "100" added, and will not be described in detail below.

As shown in FIG. 3, the portable information terminal 18 has a bus 148 to which there are connected a control processor 140 comprising a CPU 142, a ROM 144, and a RAM 146, an EEPROM 150, a tuner 152, a decoder 154, a control key assembly 156 as a control input unit that also functions as a category setting unit via an interface 158, an LCD (Liquid Crystal Display) monitor 166 and a speaker 162 via respective interfaces 164, 160.

As shown in FIG. 1, the control key assembly 156 has a cross key 70 for selecting a reception broadcasting channel and setting up a category, a decision key 72, a cancel key 74, and a mode switching key 77.

The monitor 166 and the speaker 162 output program data as contents and CM data as contents selectively extracted by the decoder 154, as a video output and an audio output, respectively, on a real-time basis upon reception thereof, to the audience.

The portable information terminal 18 has a detachable built-in battery 76 for supplying electric energy to various components thereof, so that the portable information terminal 18 can be used while being carried around by the user.

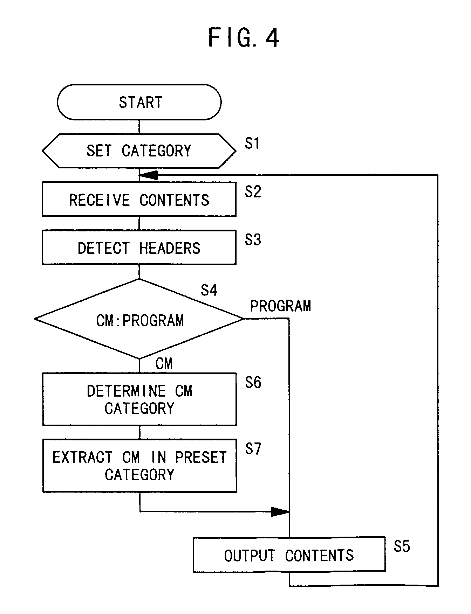

Operation of the user preference advertisement system 10 shown in FIG. 1 will be described below with reference to FIG. 4. FIG. 4 shows an operation sequence of the television receiver 16 and the portable information terminal 18 as a selective receiving apparatus or a selective recording and reproducing apparatus for receiving contents and displaying video images based on the received contents, i.e., for performing a real-time contents receiving process.

When the power supply of the television receiver 16 and/or the portable information terminal 18 is turned on, a category setting process as a preparatory process is carried out in step S1.

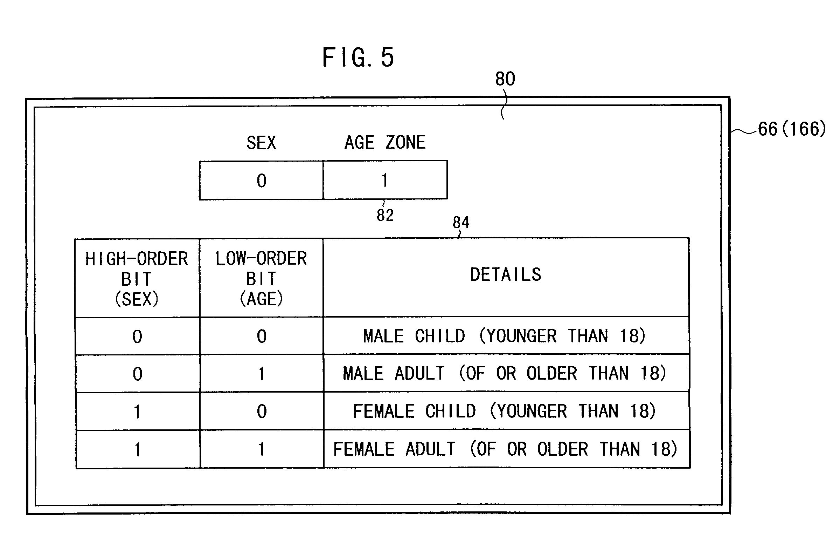

In the category setting process, the category of a CM in contents to be received is set up. Specifically, the monitor 66 (166) displays a category setting image 80 shown in FIG. 5. The viewer uses the remote commander 56 if viewing the television receiver 16, or uses the control key assembly 156 if carrying the portable information terminal 18, to enter a desired category (attribute) in a category setting column 82 for setting up SEX and AGE.

The viewer can refer to a category setting table 84 that has been stored in the ROM 44 (144) and/or the EEPROM 50 (150), and can select one of high-order bits representing sex and one of low-order bits representing age from the category setting table 84 and enter the selected bits in the category setting column 82.

In the example shown in FIG. 5, there are four categories to choose from, each in two bits, i.e., "00" = "MALE CHILD YOUNGER THAN 18", "01" = "MALE ADULT OF OR OLDER THAN 18", "10" = "FEMALE CHILD YOUNGER THAN 18", "11" = "FEMALE ADULT OF OR OLDER THAN 18". The viewer can enter one of these four categories.

In the example shown in FIG. 5, the viewer has entered "0" for SEX and "1" for AGE, thus selecting the category "01" = "MALE ADULT OF OR OLDER THAN 18". The selected category is stored in the EEPROM 50 (150) which functions as a category setting memory.

After the preparatory process in step S1, radio waves are received in step S2.

Specifically, in step S2, the radio waves 30, 38 in a plurality of channels from the broadcasting station 12 are transmitted from the respective transmission antennas 20, 22. The radio wave 38 directly transmitted from the transmission antenna 22 is received by the reception antenna 26, and the radio waves 36, 34 transmitted via the broadcasting satellite 32 are received respectively by the reception antennas 24, 28.

The tuner 52 (152) outputs from its output terminal contents data as modulated data in the channel that has been set by the remote commander 56 or the control key assembly 156 to an input terminal of the decoder 54 (154).

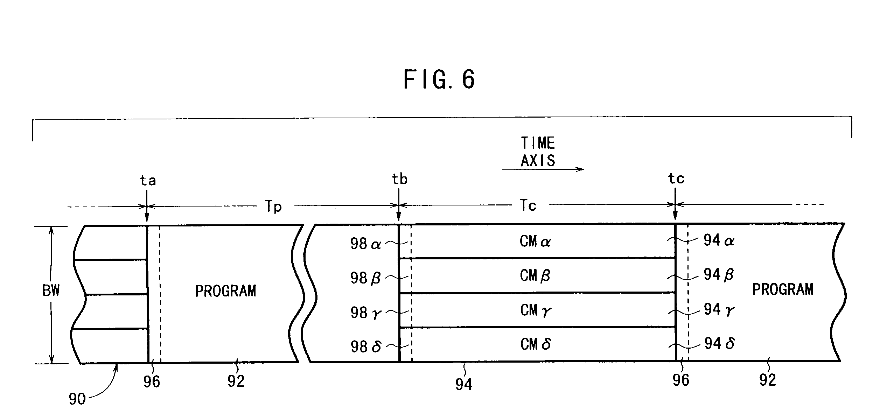

FIG. 6 schematically shows contents data 90 as demodulated data. In FIG. 6, the horizontal axis represents a time axis, and the vertical axis a transmission bandwidth BW (Hz). The transmission bandwidth BW may be considered as a transfer rate (bits/sec.).

The contents data 90 comprises an alternate series of program data 92 and CM data 94. A program broadcasting time zone Tp extends between a time ta and a time tb, and a CM broadcasting time zone Tc extends between the time tb and a time tc.

The CM data 94 comprises four CM data 94α (CMα), 94β (CMβ), 94γ (CMγ), 94δ (CMδ) that are assigned to respective four equally divided bandwidths of the transmission bandwidth BW and that can simultaneously be received.

The program data 92 includes a header 96 at its beginning end where information indicative of the program data 92 is inserted by the broadcasting station 12.

The CM data 94α, 94β, 94γ, 94δ have respective headers 98α, 98β, 98γ, 98δ where information indicative of the CM data 94 is inserted by the broadcasting station 12 and also categories of the CM data 94α, 94β, 94γ, 94δ are inserted as information.

The categories of the CM data 94α, 94β, 94γ, 94δ represent the above four categories represented by "00" = "MALE CHILD YOUNGER THAN 18", "01" = "MALE ADULT OF OR OLDER THAN 18", "10" = "FEMALE CHILD YOUNGER THAN 18", "11" = "FEMALE ADULT OF OR OLDER THAN 18".

In step S3, the decoder 54 (154) successively detects the headers 96, 98α, 98β, 98γ, 98δ. In step S4, it is decided whether the received data is the program data 92 or the CM data 94 based on the headers 96, 98α, 98β, 98γ, 98δ.

For example, if the header 96 is received at the time ta in step S3, then the program data 92 is judged as being received in step S4. The program data 92 is supplied from the decoder 54 (154) to the bus 48 (148), a video output signal corresponding to the program data 92 is supplied via the interface 64 (164) and displayed on the monitor 66 (166), and an audio output signal corresponding to the program data 92 is supplied via the interface 60 (160) and outputted from the speaker 62 (162), in step S5. The viewer thus can see and listen to the program based on the program data 92 on a real-time basis. The decoder 154 and the interfaces 164, 160 function as a real-time reproducer for reproducing programs and CMs on a real-time basis.

If the headers 98α, 98β, 98γ, 98δ are received at the time tb in step S3, then the CM data 94 is judged as being received in step S4. In step S6, the categories inserted in the headers 98α, 98β, 98γ, 98δ are detected, and the categories of the CM data 94 are determined by the decoder 54 (154).

As described above, the categories "00", "01", "10", "11" have been inserted in the headers 98α, 98β, 98γ, 98δ by the broadcasting station 12.

The decoder 54 (154) compares the category set up in step S1 and stored in the EEPROM 50 (150) with the categories inserted in the headers 98α, 98β, 98γ, 98δ, thereby to select one of the categories in agreement with the stored category.

In step S7, the decoder 54 (154) extracts the CM data 94β (CMβ) from the CM data 94 which has the same category as the category ("01") stored in the EEPROM 50 (150), based on the result of the comparison in step S6.

Thereafter, in step S5, a video output signal and an audio output signal which represent the CM data 94β (CMβ) extracted by the decoder 54 (154) in step S7 are outputted from the monitor 66 (166) and the speaker 62 (162).

Consequently, the television receiver 16 and the portable information terminal 18, each functioning as a selective receiving apparatus or a selective recording and reproducing apparatus, allow the viewer to see the program based on the program data 92 in the channel selected by the remote commander 56 and the control key assembly 156, and the CM based on the CM data 94β set by the remote commander 56 and the control key assembly 156, successively in the order in which they are received, on a real-time basis.

As described above, the broadcasting station 12 simultaneously transmits the CMs (CMα, CMβ, CMγ, CMδ) in the different categories on the radio waves 30, 38 between the times tb, tc, and the television receiver 16 and/or the portable information terminal 18, as the selective receiving apparatus, selectively outputs, on a real-time basis, a video signal and/or an audio signal of only the CM whose category is in agreement with the category that has been set up by the remote commander 56 or the control key assembly 156 as the category setting unit.

As a result, only those CMs which fall in the desired category of the viewer, i.e., which match the user or the viewer, are selected, and video signals and/or audio signals thereof are outputted.

In this manner, viewers and listeners can be narrowed down to specific target groups for an increased advertisement effect without having to increase the number of channels. Specifically, heretofore, since the CM data 94 has not been divided, but only one type of CM data has accompanied one program, it has been necessary to provide four channels to broadcast one program in order to achieve the same advertisement effect as shown in FIG. 6. According to the present embodiment, however, only one channel is needed to simultaneously transmit different types of CM data in combination with one program. As a consequence, power resources for broadcasting radio waves can be reduced, and the share of expenses paid by each of advertisers of simultaneous CMs can be reduced.

Inasmuch as a plurality of CM data 94 are simultaneously inserted between program data 92, the advertisement effect can be increased without increasing the CM exposure that is defined by (CM time zone/program time zone).

In the above embodiment, the user sets up a certain category using the category setting image 80 displayed on the monitor 66 (166). However, buttons indicative of male and female and buttons indicative of ages equal to or higher than 18 and ages lower than 18 may be provided as CM preference buttons on the console of the television receiver 16, and the user may set up a certain category using those CM preference buttons.

Moreover, the process carried out by the decoder 54 (154) may be performed by the CPU 42 (142).

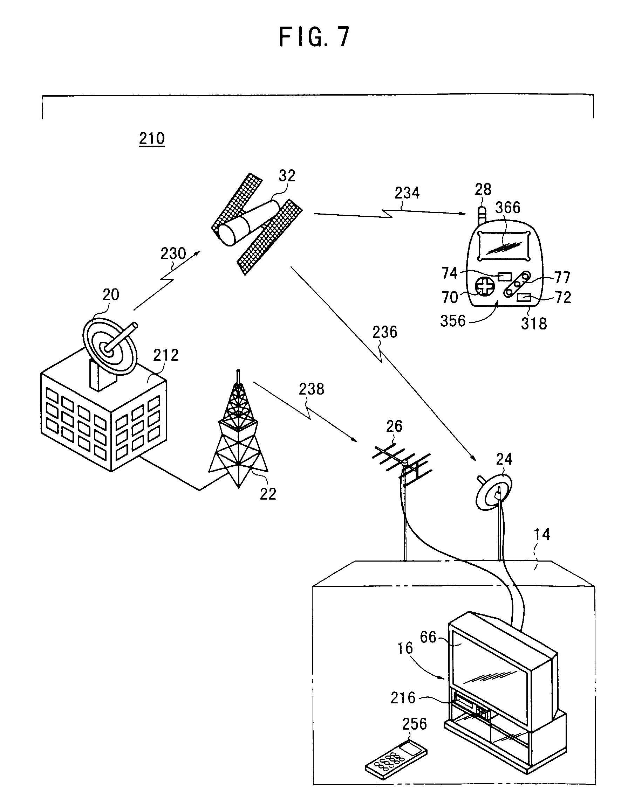

FIG. 7 schematically shows a user preference advertisement system 210 which incorporates a selective recording and reproducing apparatus according to another embodiment of the present invention. Those parts of the user preference advertisement system 210 which are identical to those of the user preference advertisement system 10 shown in FIG. 1 are denoted by identical reference numerals with "200" added, and will not be described in detail below.

As shown in FIG. 7, the user preference advertisement system 210 basically comprises a broadcasting station 212 for broadcasting contents including programs and commercial messages (CMs) on a radio wave, a video recorder 216 positioned indoors, e.g., in a home 14, and serving as a selective recording and reproducing apparatus for the contents, and a portable information terminal 318 carried and used outdoors and serving as another selective recording and reproducing apparatus for the contents. The video recorder 216 is connected to, but may be integrally combined with, a television receiver 16.

A satellite wave transmission antenna 20 for transmitting satellite digital broadcast waves and mobile digital broadcast waves, and a ground station transmission antenna 22 for transmitting ground digital broadcast waves are connected to the broadcasting station 212.

A satellite wave reception antenna 24 disposed at the home 14 and a ground digital broadcast reception antenna 26 are connected to the video recorder 216 and television receiver 16.

The portable information terminal 318 has a mobile digital broadcast reception antenna 28.

A radio wave 230 transmitted from the transmission antenna 20 of the broadcasting station 212 is sent via a broadcasting satellite 32 as a radio wave 234 to the portable information terminal 318, which receives the radio wave 234 via the reception antenna 28.

The radio wave 230 transmitted from the transmission antenna 20 of the broadcasting station 212 is also sent via the broadcasting satellite 32 as a radio wave 236 to the reception antenna 24 of the video recorder 216 and the television receiver 16, which receive the radio wave 236 via the reception antenna 24.

A radio wave 238 transmitted from the transmission antenna 22 of the broadcasting station 212 is received by the video recorder 216 and the television receiver 16 via the reception antenna 26.

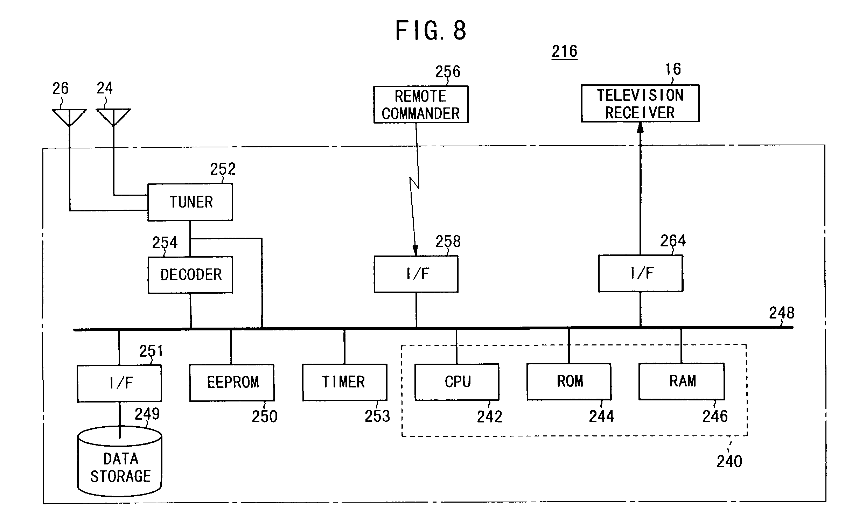

FIG. 8 shows in block form the video recorder 216 in the user preference advertisement system 210 shown in FIG. 7.

As shown in FIG. 8, the video recorder 216 has a control processor 240. The control processor 240 comprises a CPU 242 as a control means, a ROM 244 as a memory means for storing a control program, etc., and a RAM 246 as a memory means for storing working data. The CPU 242, the ROM 244, and the RAM 246 are connected to each other via a bus 248.

A EEPROM 250 such as a flash memory as a memory means where stored data can be rewritten is connected to the bus 248.

A data storage 249 such as a video tape, a magnetooptical disk, a hard disk, etc. as a mass storage is connected via an interface 251 to the bus 248. If a video tape is used as the data storage 249, then a video tape recorder is used as the video recorder 216.

A timer 253 as a timing means also is connected to the bus 248 for setting up dates and times for timer-based recording, i.e., programmed recording.

The antennas 24, 26 are connected to a tuner 252. The antennas 24, 26 and the tuner 252 jointly make up a reception assembly. The tuner 252 is supplied with channel selection information that has been set up by a remote commander 256 as a control input unit that also functions as a category setting unit, via an interface 258, the bus 248, and the control processor 240.

Based on the channel selection information, the tuner 252 demodulates the data of a channel and supplies the demodulated data via a decoder 254 as a selective contents extractor or a contents identifier to the bus 248.

The decoder 254 selectively extracts CM data that matches a category preset by the remote commander 256 and stored in the EEPROM 250, from a plurality of CMs as contents classified into a plurality of categories which have been simultaneously received via the reception antennas 24, 26 and the tuner 252, sends the extracted CM data to the bus 248, and sends program data of the received contents directly to the bus 248.

The remote commander 256 has a channel selection key, a cross key, and a decision key. The user can set a predetermined category and also dates and times for programmed recording with those keys of the remote commander 256, using images displayed on a monitor 66 of the television receiver 16.

Program data and selected CM data which have been supplied via the decoder 254 to the bus 248 are sent via the interface 251 to the data storage 249, and stored in the data storage 249.

The data stored in the data storage 249 are subsequently read therefrom at a desired time, and video and audio data thereof are sent via an interface 264 to the television receiver 16.

The monitor 66 and the speaker 62 output the program data as contents and the CM data as contents selectively extracted by the decoder 254, as a video output and an audio output, respectively, to the audience.

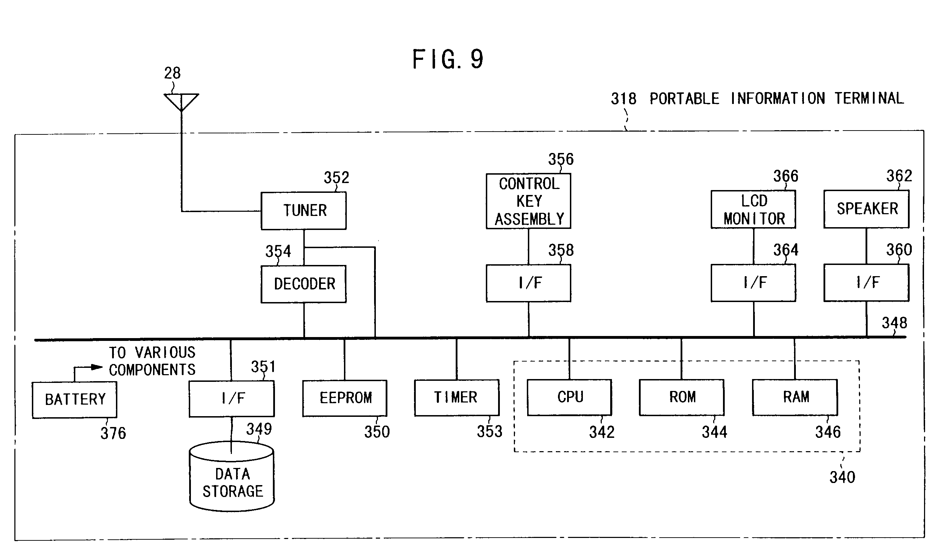

FIG. 9 shows in block form the portable information terminal 318 in the user preference advertisement system 210 shown in FIG. 7.

The portable information terminal 318 is basically similar in structure and function to the video recorder 216 shown in FIG. 8. Those parts of the portable information terminal 318 which are identical to those of the video recorder 216 are denoted by identical reference numerals with "200" replaced by "300", and will not be described in detail below.

As shown in FIG. 9, the portable information terminal 318 has a bus 348 to which there are connected a control processor 340 comprising a CPU 342, a ROM 344, and a RAM 346, an EEPROM 350, a tuner 352, a decoder 354, a control key assembly 356 as a control input unit that also functions as a category setting unit via an interface 358, an LCD monitor 366 and a speaker 362 via respective interfaces 364, 360.

A timer 353 as a timing means also is connected to the bus 348 for setting up dates and times for timer-based recording, i.e., programmed recording.

As shown in FIG. 7, the control key assembly 356 has a cross key 70 for selecting a reception broadcasting channel, setting a date and a time for programmed recording, and setting up a category, a decision key 72, a cancel key 74, and a mode switching key 77 for switching between a recording/reproducing mode, a recording mode, and a reproducing mode.

Program data and selected CM data which have been supplied via the decoder 354 to the bus 348 are sent via an interface 351 to a data storage 349 such as a flash memory or the like, and stored in the data storage 349.

The data stored in the data storage 349 are subsequently read therefrom at a desired time, and video and audio data thereof are sent via the respective interfaces 364, 360 to the monitor 366 and the speaker 362. The monitor 366 and the speaker 362 output the program data as contents and the CM data as contents selectively extracted by the decoder 354, as a video output and an audio output, respectively, to the audience. The portable information terminal 318 has a detachable built-in battery 376 for supplying electric energy to various components thereof, so that the portable information terminal 318 can be used while being carried around by the user.

The video recorder 216 and the portable information terminal 318 each function as a selective recording and reproducing apparatus, and also function as a selective receiving apparatus for displaying video signals on a real-time basis when it receives contents transmitted on a radio wave.

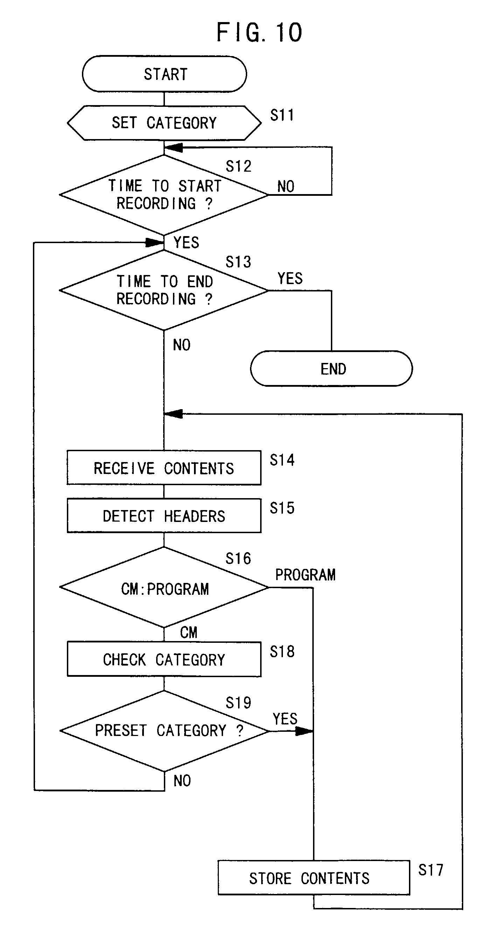

Operation of the user preference advertisement system 210 shown in FIG. 7 will be described below with reference to FIG. 10. FIG. 10 shows an operation sequence of the video recorder 216 and the portable information terminal 318 as a selective recording and reproducing apparatus.

When the power supplies of the video recorder 216 and the portable information terminal 318 are turned on, a category setting process as a preparatory process is carried out in step S11.

In the category setting process, the category of a CM in contents to be received is set up. Specifically, the monitor 266 (366) displays a category setting image 80 shown in FIG. 5. The viewer uses the remote commander 256 if using the video recorder 216, or uses the control key assembly 356 if carrying the portable information terminal 318, to enter a desired category (attribute) in a category setting column 82 for setting up SEX and AGE.

In the example shown in FIG. 5, the viewer has selected the category "01" = "MALE ADULT OF OR OLDER THAN 18". The selected category is stored in the EEPROM 250 (350) which functions as a category setting memory.

After the preparatory process in step S11, radio waves start being received when a preset time for starting programmed recording, e.g., 4:00 AM, has arrived in step S12.

The reception of radio waves is finished when a preset time for ending programmed recording, e.g., 5:00 AM, has arrived in step S13.

In step S14, the radio waves 230, 238 in a plurality of channels from the broadcasting station 212 are transmitted from the respective transmission antennas 20, 22.

The radio wave 238 directly transmitted from the transmission antenna 22 and the radio waves 236, 234 transmitted via the broadcasting satellite 32 are received respectively by the reception antennas 26, 24, 28 of the video recorder 216 and the portable information terminal 318. The tuner 252 (352) outputs from its output terminal contents data as modulated data in the channel that has been set by the remote commander 256 or the control key assembly 356 to an input terminal of the decoder 254 (354).

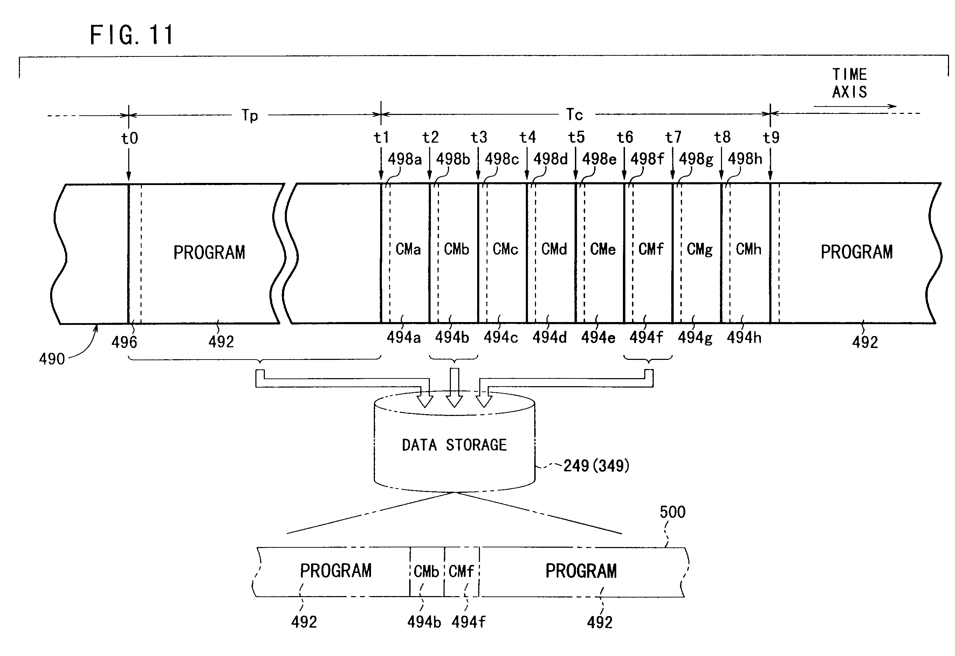

FIG. 11 schematically shows contents data 490 as demodulated from the radio waves 230, 238 broadcast from the broadcasting station 212. In FIG. 11, the horizontal axis represents a time axis. The contents data 490 comprises an alternate series of program data 492 and a succession of CM data 494. A program broadcasting time zone Tp extends between a time t0 and a time t1, and a CM broadcasting time zone Tc extends between the time t1 and a time t9.

The CM data 494 include eight successive CM data 494a (CMa) through 494h (CMh).

The program data 292 includes a header 496 at its beginning end where information indicative of the program data 492 is inserted. The CM data 494a through 494h have respective headers 498a through 498h where information indicative of the CM data 494 is inserted and also categories of the CM data 494a through 494h are inserted as information.

In step S15, the decoder 254 (354) successively detects the headers 496, 498a through 498h. In step S16, it is decided whether the received data is the program data 492 or the CM data 494 based on the headers 96, 498a through 498h.

For example, if the header 496 is received at the time t0 in step S15, then the program data 492 is judged as being received in step S16. The program data 492 is supplied from the decoder 254 (354) to the bus 248 (348) and stored in the data storage 249 (349) in step S17.

If the header 498a is received at the time t1 in step S15, then the CM data 494 is judged as being received in step S16. In step S18, the categories inserted in the headers 498a through 498h are detected, and the categories of the CM data 494 are determined.

As described above, the categories "00", "01", "10", "11" have been inserted in the headers 494a through 494h by the broadcasting station 212.

In step S18, it is confirmed which one of the categories "00", "01", "10", "11" each of the categories of the headers 498a through 498h agrees with.

In step S19, the category confirmed in step S18 is compared with the category set up in step S11 and stored in the EEPROM 250 (350).

Specifically, it is decided whether the category confirmed in step S18 is the same as the category "01" stored in the EEPROM 250 (350) or not. Those CM data 494b, 494f whose category is the same as the stored category "01" are extracted (see FIG. 11). In the present embodiment, the CM data 494b, 494f represent CMb, CMf of the same category which belong to different advertisers.

The extracted CM data 494b, 494f are stored into the data storage 249 (349) in step S17.

If the CM data 494 are those CM data whose categories are not the same as the stored category "01", i.e., if the CM data 494 are the remaining CM data 494a, 494c - 494e, 494g, 494h in step S19, then control returns to step S13. Thereafter, the processing in steps S14 - S19 is repeated until the preset time for ending programmed recording is reached in step S13.

The program data and the CM data 494b, 494f that have been recorded in the data storage 249 (349) can be reproduced by the television receiver 16, the LCD monitor 366, or the speaker 362, which serves as a contents reproducer, at a desired time.

In the present embodiment, as described above, the program data 492 and the desired CM data 494 (494b, 494f) can be stored in the data storage 249 (349) as recorded data 500 (see FIG. 11). At a desired subsequent dime, the program data 492 and the desired CM data 494 (494b, 494f) that have been stored can be reproduced for view. If the program data 492 and the desired CM data 494 (494b, 494f) are recorded by the video recorder 216, then the recorded data can be reproduced by the video recorder 216 and viewed by the user before the user goes to work, for example. If the program data 492 and the desired CM data 494 (494b, 494f) are recorded by the portable information terminal 316, then the recorded data can be reproduced by the LCD monitor 366 and viewed by the user while the user is commuting, e.g., while the user is on a commuter train.

Of broadcast CMs of various types, the CM data 494 recorded in the data storage 249 (349) belong to certain particular preset categories, i.e., match the user's preference. The program data that is also recorded in the data storage 249 (349) represents a program desired by the user because its channel has intentionally been selected by the user.

As a consequence, the advertisement effect can be increased without having to unduly increase the storage capacity of the data storage 249 (349) and increase the number of CMs included in programs viewed by the user.

The user preference advertisement systems 10, 210 shown in FIGS. 1 and 7 allow only those CMs which match particular viewers to be extracted from broadcast CMs of various types, and can increase the advertisement effect without having to increase the number of broadcasting channels and increase the number of CMs that are displayed.

According to the present invention, the contents of categories that have been set up by the reception side, e.g., preset CMs, can be outputted as images, for example, on a real-time basis, or can be stored and then reproduced as images for examples.

If the apparatus on the reception side is a television receiver or a portable information terminal, then categories of contents such as CMs can be set up in advance to increase the advertisement effect (CM effect) by way of narrowing down viewers and listeners to specific target groups without having to increase the number of broadcasting channels.

From the standpoint of a contents transmission side, the advertisement effect (CM effect) can be increased without increasing the period of time for broadcasting CMs, i.e., without increasing the CM exposure.

The recording and reproducing apparatus can increase the advertisement effect (CM effect) without having to increase the capacity of the memory device thereof. The recording and reproducing apparatus also allows the viewer to view only desired programs and desired CMs.

Although certain preferred embodiments of the present invention have been shown and described in detail, it should be understood that various changes and modifications may be made therein without departing from the scope of the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An apparatus for selectively receiving contents, comprising:
a reception assembly (24, 26, 25) for receiving simultaneously transmitted contents which are divided into a plurality of categories;
a category setting unit (56) for setting up at least one of said categories;
a selective contents extractor (54) for selectively extracting contents in the category set up by said category setting unit, from the contents received by said reception assembly and divided into said plurality of categories; and
means for outputting a video signal and/or an audio signal of the contents extracted by said selective contents extractor on a real-time basis.

2. An apparatus according to claim 1, wherein said contents represent a commercial message.

3. An apparatus according to claim 1, for use as a television receiver (16).

4. An apparatus according to claim 1, for use as a portable information terminal (18).

5. An apparatus for selectively recording contents in a memory device (349) and thereafter reproducing the recorded contents, comprising:
a reception assembly (24, 26, 25) for receiving simultaneously transmitted contents which are divided into a plurality of categories;
a category setting unit (256) for setting up at least one of said categories;
a selective contents extractor (254) for selectively extracting contents in the category set up by said category setting unit, from the contents received by said reception assembly and divided into said plurality of categories; and
means for storing the contents extracted by said selective contents extractor into said memory device (249).

6. An apparatus according to claim 5, wherein said contents represent a commercial message.

7. An apparatus according to claim 5, for use as a video recorder (216).

8. An apparatus according to claim 5, for use as a portable information terminal (318).

9. An apparatus for selectively recording and reproducing contents, comprising:
a reception assembly (24, 26, 52) for alternately receiving a program and simultaneously transmitted commercial messages which are divided into a plurality of categories;
a contents identifier (54) for distinguishing said program and said commercial messages from each other;
a category setting unit (56) for setting up at least one of said categories;
a selective commercial message extractor (54) for selectively extracting a commercial message in the category set up by said category setting unit, from the commercial messages received by said reception assembly and divided into said plurality of categories; and
a reproducer (154, 164, 160) for reproducing said program and said extracted commercial message on a real-time basis in an order in which said program and said extracted commercial message are received.

10. An apparatus for selectively recording and reproducing contents, comprising:
a reception assembly (24, 26, 252) for alternately receiving a program and commercial messages which are divided into a plurality of categories;
a contents identifier (54) for distinguishing said program and said commercial messages from each other;
a selective commercial message extractor (254) for selectively extracting a commercial message in a preset category, from the commercial messages divided into said plurality of categories;
a memory device (349) for storing said program and said extracted commercial message; and
a reproducer (366) for reproducing the program and the extracted commercial message which are stored in said memory device (349).

11. A method of selectively receiving contents, comprising the steps of:
(S2) receiving simultaneously transmitted contents which are divided into a plurality of categories;
(S7) selectively extracting contents in a preset category, from the received contents which are divided into said plurality of categories; and
(S5) outputting a video signal and/or an audio signal of the extracted contents on a real-time basis.

12. A method according to claim 11, wherein said contents represent a commercial message.

13. A method of selectively recording and reproducing contents, comprising the steps of:
(S14) receiving contents which are divided into a plurality of categories;
(S18, S19) selectively extracting contents in a preset category, from the received contents which are divided into said plurality of categories;
(S17) storing the extracted contents; and
reproducing the stored contents.

14. A method according to claim 13, wherein said contents represent a commercial message.
